# EUROPÄISCHE PATENTANMELDUNG

(11) **EP 4 012 897 A1**
(43) Veröffentlichungstag der Anmeldung: **15.06.2022**
(21) Anmeldenummer: 20213674.3
(22) Anmeldetag: 14.12.2020
(51) Int. Cl.: H02K 7/18, H02K 1/14, H02K 1/18, H02K 15/06, H02K 15/02, H02K 1/20, H02K 9/04, H02K 3/48, H02K 3/52, H02K 3/18, H02K 1/27, H02K 19/16, H02K 21/22

(54) **VERFAHREN ZUR FIXIERUNG VON STATORSEGMENTEN EINER SEGMENTIERTEN DYNAMOELEKTRISCHEN MASCHINE**

(71) Anmelder: Flender GmbH, 46395 Bocholt (DE)
(72) Erfinder: Bodensiek, Kevin, 90552 Röthenbach an der Pegnitz (DE); Schäfer, Klaus, 90455 Nürnberg (DE); Schönbauer, Norbert, 94072 Bad Füssing (DE); Teringl, Claus, 94060 Pocking (DE); Weger, Michael, 94149 Kößlarn (DE)
(74) Vertreter: Michalski Hüttermann & Partner Patentanwälte mbB

(57) **Zusammenfassung**

Die Erfindung betrifft ein Verfahren zur Fixierung von benachbarten Spulenseiten unterschiedlicher Spulen in einander zuweisenden offenen Nuten in einem Segmentgrenzspalt (19) zwischen Statorsegmenten (3) eines umfänglich aus Statorsegmente (3) aufgebauten Stators einer dynamoelektrischen Maschine, insbesondere Windkraftgenerator durch folgende Schritte:
- zumindest Vorpositionieren der Statorsegmente (3) auf einem Statorträger,
- radiales Einsetzen zumindest eines Fixierelements in den jeweiligen Segmentgrenzspalt (19),
- endgültiges Positionieren der Statorsegmente (3) am Statorträger.

## Beschreibung

Die Erfindung betrifft ein Verfahren zur Montage eines segmentierten Stators einer dynamoelektrischen Maschine, einen segmentierten Stator einer dynamoelektrischen Maschine, insbesondere eines Generators, einer Windkraftanlage und eine Windkraftanlage mit einem derartigen Stator.

Bei segmentierten dynamoelektrischen Maschinen, insbesondere Motoren oder Generatoren im höheren Leistungsbereich über 1MW besteht die Möglichkeit das Blechpaket des Stators so aufzuteilen, dass an den nutparallelen Begrenzungsseiten der Segmente halbe Nuten vorhanden sind. Erst durch die Montage der einzelnen Segmente in Umfangsrichtung und dadurch der Komplettierung des Stators in Umfangsrichtung wird eine vollständige Nut mit einer Wicklung geschaffen. Dies wird beispielsweise bei großen Zahnspulen- oder Formspulenwicklungen umgesetzt.

Aus der DE 10 2005 029 895 A1 ist ein Direktantrieb für Großantriebe bekannt, der aus mehreren Segmenten aufgebaut ist, die pro Segment eine abgeschlossene Wicklungsanordnung aufweisen.

Aus der EP 0 718 955 A2 ist ein Stator einer hochpoligen mehrphasigen elektrischen Maschine bekannt, wobei der Stator mehrere Segmente unterteilt ist und sich auf jedem Segment eine mehrphasige Wicklung befindet.

Problematisch ist die Fixierung der außenliegenden Spulenschenkeln bzw. Spulenseiten an den umfänglich äußeren Rändern der Statorsegmente in den halben bzw. offenen Nuten, also den Segmentgrenzen. Die Fixierung der außenliegenden Spulenseiten - also in den halben bzw. offenen Nuten - ist schwierig, da im Betrieb der dynamoelektrischen Maschine, sich die Spulen durch magnetische Kräfte bewegen und so z.B. sich gegenseitig in den Segmentgrenzspalten die Isolierung beschädigen können.

Ausgehend davon liegt der Erfindung die Aufgabe zugrunde, bei einem Stator mit umfänglich angeordneten Statorsegmenten für die Spulenseiten an den Segmentgrenzspalten eine ausreichende Fixierung zu schaffen. Des Weiteren soll damit ein zuverlässiger und effizienter Stator einer dynamoelektrischen Maschine, insbesondere eines Windkraftgenerators einer Windkraftanlage geschaffen werden.

Die Lösung der gestellten Aufgabe gelingt durch ein Verfahren zur Fixierung von benachbarten Spulenseiten unterschiedlicher Spulen in einander zuweisenden offenen Nuten in einem Segmentgrenzspalt zwischen Statorsegmenten eines umfänglich aus Statorsegmenten aufgebauten Stators einer dynamoelektrischen Maschine, insbesondere Windkraftgenerator durch folgende Schritte:
- zumindest Vorpositionieren der Statorsegmente auf einem Statorträger,
- radiales Einsetzen zumindest eines Fixierelements in den jeweiligen Segmentgrenzspalt,
- endgültiges Positionieren der Statorsegmente am Statorträger.

Die Lösung der gestellten Aufgabe gelingt auch durch einen Stator einer dynamoelektrischen Maschine, insbesondere Windkraftgenerator, mir umfänglich angeordneten Statorsegmenten,
- wobei jedes Statorsegment axial hintereinander angeordnete genutete Blechen aufweist, die ein Blechpaket bilden, so dass im Wesentlichen axial verlaufende Nuten gebildet sind,
- wobei die Statorsegmente abgeschlossene Wickeleinheiten aus Spulen, insbesondere Zahnspulen oder Formspulen aufweisen,
- wobei in einer Nut eine Spulenseite oder zwei Spulenseiten unterschiedlicher Spulen angeordnet sind,
- wobei an einer umfänglichen Segmentgrenze in offenen Nuten der Statorsegmente eine Spulenseite einer Spule angeordnet sind,
- wobei in einem Segmentgrenzspalt zwischen den umfänglich betrachtet benachbarten Statorsegmenten Fixierelemente vorhanden sind, die die Spulenseiten unterschiedlicher Spulen benachbarter Statorsegmente in den offenen Nuten mittels beabstandet fixieren und/oder positionieren sind.

Die Lösung der gestellten Aufgabe gelingt auch durch eine dynamoelektrische Maschine, insbesondere direkt angetriebener Windkraftgenerator mit einem erfindungsgemäßen Stator wobei der Stator als ein innenliegender Stator mit Außenläufer ausgebildet ist.

Die Lösung der gestellten Aufgabe gelingt auch durch eine dynamoelektrische Maschine, insbesondere direkt angetriebener Windkraftgenerator mit einem erfindungsgemäßen Stator wobei der Stator als außenliegender Stator mit Innenläufer ausgebildet ist.

Die Lösung der gestellten Aufgabe gelingt auch durch eine Windkraftanlage mit einer erfindungsgemäßen dynamoelektrischen Maschine.

Das Fixierelement weist eine vergleichsweise dünne Hartgewebeplatte auf, deren großflächige Seiten Silikonschlangen aufweisen, die von einem grobmaschigen Gewebe oder einem Band umwickelt sind.

Die erfindungsgemäßen Fixierelemente erlauben eine "trockene" Handhabung während der Positionierung der Fixierelemente im Segmentgrenzspalt durch den Schutz des Gewebes bzw. Bandes. Silikon oder eine ähnliche Masse wird durch schwertartiges Eindrücken der Hartgewebeplatte bzw. eines Glashartgewebeschwertes in den Segmentgrenzspalt durch den entstehenden Druck durch das grobmaschige Gewebe gepresst und an den beiden Spulenseiten verklebt.

Die Hartgewebeplatte bzw. das Glashartgewebeschwertes verbleibt im Segmentgrenzspalt.

Die erfindungsgemäßen Fixierelemente erlauben dem Montagepersonal eine trockene Handhabung der Fixierelemente während der "Segment zu Segment Montage".

Durch die Anordnung von erfindungsgemäßen Fixierelementen im Segmentgrenzspalt erhält man eine dauerhafte Fixierung und/oder Isolierung der Spulenseiten im Segmentgrenzspalt. Es findet somit eine vergleichsweise gute Anbindung der beiden Spulenseiten zueinander statt, so dass magnetische Kräfte im Betrieb der dynamoelektrischen Maschine eine Relativbewegung der Spulenseiten zueinander unterbunden wird und somit eine Beschädigung der Isolierung der Spulenseiten im Segmentgrenzspalt vermieden wird.

Die Unterbindung der Relativbewegung der Spulenseiten zueinander kann auch nach höheren Temperatureinwirkungen (ca. 180°C) gewährleistet werden.

Außerdem lassen sich durch diese Fixierelemente auch mechanische Toleranzen u.a. im Segmentgrenzspalt ausgleichen.

Eine geschlossene Nut setzt sich aus zwei gegenüberliegenden Nutseitenwänden und einem Nutgrund zusammen. Als offene Nut wird demnach eine Nut bezeichnet, die nur eine Nutseitenwand und zumindest einen Teil des Nutgrundes aufweist.

Die Fixierelemente sind in einer Ausführungsform kissenartig ausgeführt, so dass sie als geschlossene eigene Einheit dem Montageprozess bereitgestellt werden können.

Die Erfindung sowie weitere vorteilhafte Ausgestaltungen der Erfindung werden anhand prinzipiell dargestellter Ausführungsbeispiele näher erläutert. Darin zeigt:
- FIG 1: eine teilperspektivische Darstellung eines Blechpakets mit Zahnspule,
- FIG 2: einen Teilausschnitt eines Blechpakets mit Zahnspule,
- FIG 3: einen Teilausschnitt eines Blechpakets mit Zahnspule und Abstandshaltern,
- FIG 4: eine teilperspektivische Darstellung eines Statorsegments mit Zahnspule,
- FIG 5: eine weitere teilperspektivische Darstellung eines Statorsegments mit Zahnspule,
- FIG 6: eine prinzipielle Darstellung eines Montagevorgangs von Statorsegmenten,
- FIG 7: eine teilperspektivische Darstellung eines Segmentgrenzspaltes,
- FIG 8: eine Seitenansicht des Segmentgrenzspaltes,
- FIG 9: eine Detailansicht des Segmentgrenzspaltes,
- FIG 10: einen Querschnitt eines Segmentgrenzspaltes,
- FIG 11: ein Fixierelement,
- FIG 12: eine prinzipielle Darstellung der Fixierung im Segmentgrenzspalt,
- FIG 13: eine Windkraftanlage.

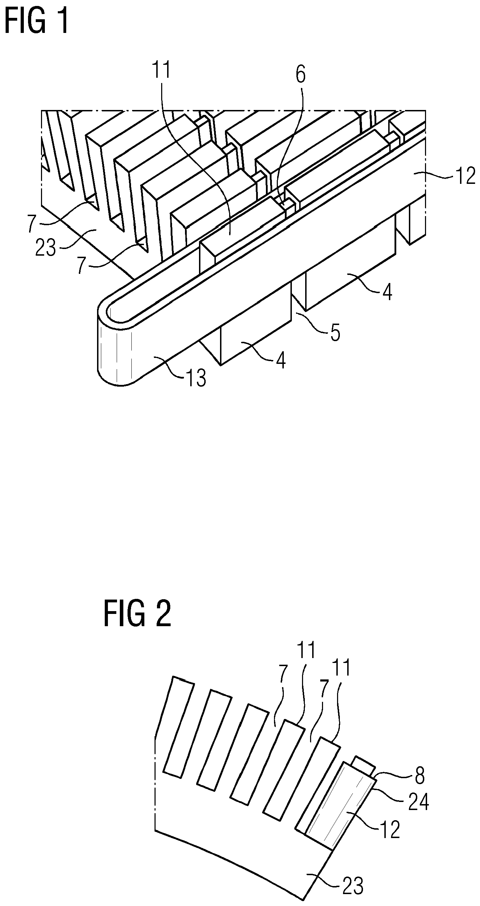

FIG 1 zeigt ein Blechpaket 32 eines Statorsegments 3 einer dynamoelektrischen Maschine 1, insbesondere eines Generators mit einem Außenläufer, was darin ersichtlich ist, dass die Nuten 7 dieses Statorsegments 3 stachelförmig radial nach außen stehen und das Statorsegment 3 konvex ausgebildet ist (siehe u.a. auch FIG 2, 6 und 8).

Das Statorsegment 3 ist in diesem Fall in axialer Richtung aus einzelnen Teilblechpaketen 4 aufgebaut, die durch Abstandshalter 6 axial voneinander beabstandet sind und Spalte 5 bilden. Jedes Teilblechpaket 4 weist eine vorgegebene Anzahl von Blechen auf. Diese Paketierung des Statorsegments 3 ermöglicht im Einsatzfall des Statorsegments 3 bzw. im Betrieb eines zusammengesetzten Stators 2 in einer Windkraftanlage 26 als Teil eines Generators u.a. eine radiale Kühlung des Stators 2 u.a. über diese Spalte 5.

Das Blechpaket 32 kann in axialer Richtung auch durchgängig aufgebaut sein, d.h., es gibt keine Spalte 5 im axialen Verlauf des Blechpakets 32.

In Nuten 7 des Blechpakets 32 des Statorsegments 3 sind Formspulen, insbesondere Spulen 12 eingesetzt, die jeweils einen Zahn 11 (Zahnspule) oder mehrere Zähne umfassen. In jedem Fall müssen Spulenseiten 24 in den offenen Nuten 8, wie später noch beschrieben und gezeigt, fixiert werden. Die Zähne 11 sind pro Blech durch einen Jochrücken 23, insbesondere einstückig verbunden, unabhängig davon, ob das Blechpaket 32 aus axial angeordneten Teilblechpaketen 4 oder axial durchgängig aufgebaut ist.

FIG 2 zeigt in einer Seitenansicht das Blechpaket 32 aus FIG 1, das auf dem umfänglich betrachtet letzten Zahn 11 des Statorsegments 3 eine Zahnspule zeigt, mit einer in der offenen Nut 8 befindlichen Spulenseite 24.

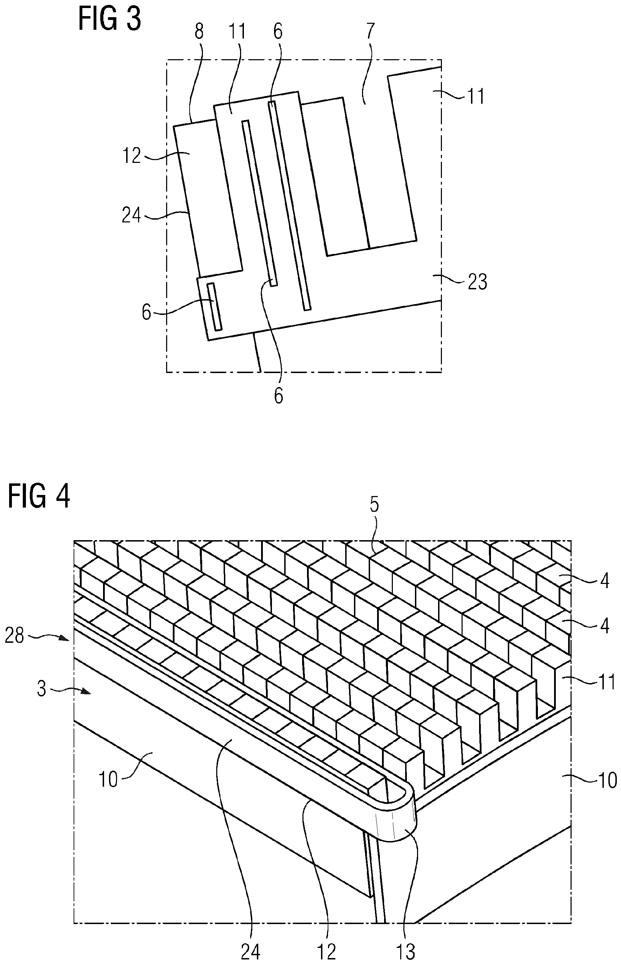

FIG 3 zeigt in einem Teilquerschnitt des Blechpakets 32 im Bereich eines Spaltes 5, wodurch die beispielshaften Abstandshalter 6 zwischen den Teilblechpaketen 4 sichtbar sind. Die Abstandshalter 6 an dem Zahn 11 und dem Jochrücken 23 generieren zu einem benachbarten Teilblechpaket 4 einen Spalt 5. Die Abstandshalter 6 sind in dieser Darstellung in ihrer Breite wesentlich geringer ausgeführt als die Breite eines Zahnes 11. Diese Spalte 5 bilden, in radialer Richtung betrachtet, Kühlkanäle des Statorsegments 3 mit vergleichsweise großem Querschnitt. Der Abstandshalter 6 erstreckt sich in radialer Richtung bis zum Jochrücken 23 oder aus mechanischen Gründen bis in den Jochrücken 23 des Statorsegments 3.

Die Abstandshalter 6 sind in ihrer radialen Ausdehnung maximal so hoch wie der Jochrücken 23 und die radiale Zahnhöhe zusammen. Im Normalfall werden die Abstandshalter 6 in den Bereich des Jochrückens 23 ragen und auch nicht die maximale Zahnhöhe einnehmen, wie dies beispielhaft an dem Zahn 11 gezeigt ist.

Der Zahn 11 ist dabei von einer Zahnspule umgeben, deren eine Spulenseite 24 in der offenen Nut 8 und die andere Spulenseite in der geschlossenen Nut 7 angeordnet ist. In der geschlossenen Nut 7 befindet sich außerdem eine nicht dargestellte Spulenseite einer weiteren Zahnspule.

FIG 4 zeigt einen Randbezirk eines Statorsegments 3 in perspektivischer Darstellung. Das Blechpaket 32 des Statorsegments 3 weist radial nach außen weisende Zähne 11 auf. Dazwischen verlaufen im Wesentlichen axial die Nuten 7. Das Blechpaket 32 ist axial aus Teilblechpaketen 4 zusammengesetzt mit dazwischenliegenden angedeuteten Spalten 5. Außerdem zeigt FIG 4 eine beispielhafte Zahnspule, die an der Stirnseite des Blechpakets 32 einen Wickelkopf 13 ausbildet. Zwischen den Teilblechpaketen 4 sind die Abstandshalter 6 vorgesehen, die insbesondere mit dem jeweils letzten bzw. ersten Blech des Teilblechpaketes 4 verschweißt sind.

An dem umfänglichen äußeren Rand des Statorsegments 1 befindet sich somit nur ein Teil einer Nut 7, die als offene Nut 8 bezeichnet wird, in die ein Spulenseite 24 einer Zahnspule 12 oder einer anderen Formspule positioniert ist.

Eine Nut 7 setzt sich aus Nutseitenwänden und einem Nutgrund zusammen. Als offene Nut 8 wird demnach eine Nut bezeichnet, die nur eine Nutseitenwand und zumindest einen Teil des Nutgrundes aufweist.

Die Nuten 7, 8 sind dabei im Wesentlichen parallel zu einer Achse 22 eines Stators 2 ausgerichtet.

Das Blechpaket 32 eines Statorsegments wird durch einen Segmentträger 10 fixiert. Der Segmentträger 10 kann dabei aus Druckplatten und Versteifungselementen gebildet sein.

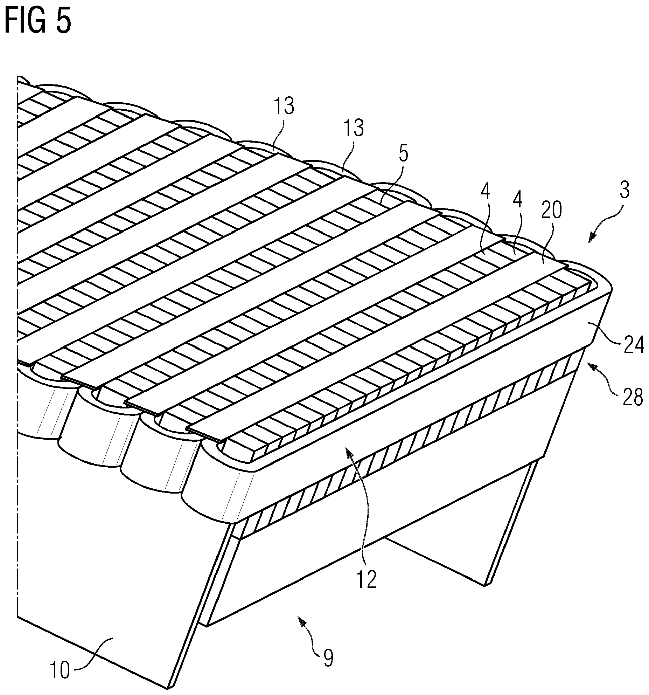

FIG 5 zeigt einen weiteren Randbezirk eines Statorsegments 3 in perspektivischer Darstellung. Das Blechpaket 32 ist aus Teilblechpaketen 4 zusammengesetzt. Jeder Zahn 11 ist von einer Zahnspule belegt, so dass sich in den geschlossenen Nuten 7 jeweils zwei Spulenseiten bzw. Spulenschenkel unterschiedlicher Zahnspulen befinden. Das Blechpaket 32 ist auf dem Segmentträger 10 angeordnet. An der umfänglichen Segmentgrenze 28 befindet sich in der offenen Nut 8 die Spulenseite 24. Die Nutschlitze der geschlossenen Nuten 7 sind mittels Nutverschluss 20 abgedeckt.

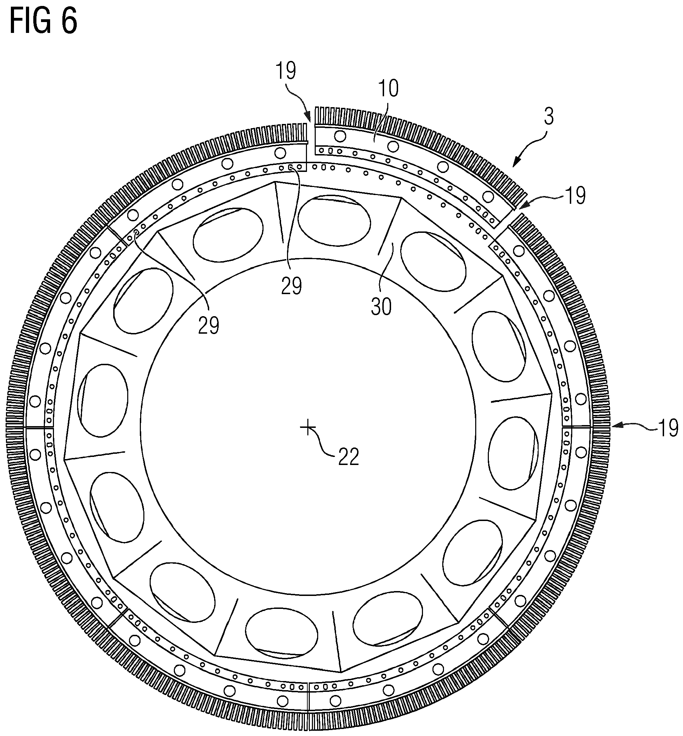

FIG 6 zeigt die prinzipielle Montage der Statorsegmente 3 auf einem Statorträger 30. Dabei werden die Statorsegmente 3 radial auf den Statorträger 30 gesetzt und zumindest vormontiert. Eine Feinjustierung, insbesondere zur Einstellung eines Luftspaltes der dynamoelektrischen Maschine 1 kann anschließend erfolgen. Die Positionierung der Statorsegmente 3 am Statorträger 30 erfolgt über eine vorgebbare Anzahl von Fixationspunkten 29. Zwischen den umfänglichen Segmentgrenzen 8 benachbarter Statorsegmente 3 sind Segmentgrenzspalte 19 vorhanden.

An diesen Segmentgrenzspalten 19 liegen nunmehr die Spulenseiten 24 benachbarter Statorsegmente 30 nebeneinander oder gar aneinander. Im Betrieb der dynamoelektrischen Maschine 1 können sich nunmehr diese Spulenseiten 24 aufgrund magnetischer Kräfte bewegen und sich gegenseitig, insbesondere die Isolation der Spulen 12 im Segmentgrenzspalt 19 beschädigen.

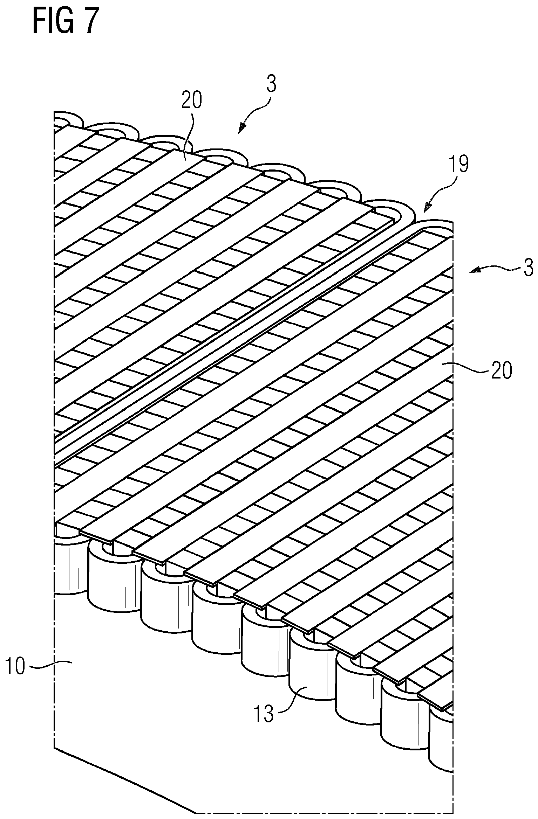

FIG 7 zeigt in einer teilperspektivischen Darstellung den Segmentgrenzspalt 19 zwischen den Segmentgrenzen 28 zweier benachbarter Statorsegmente 3.

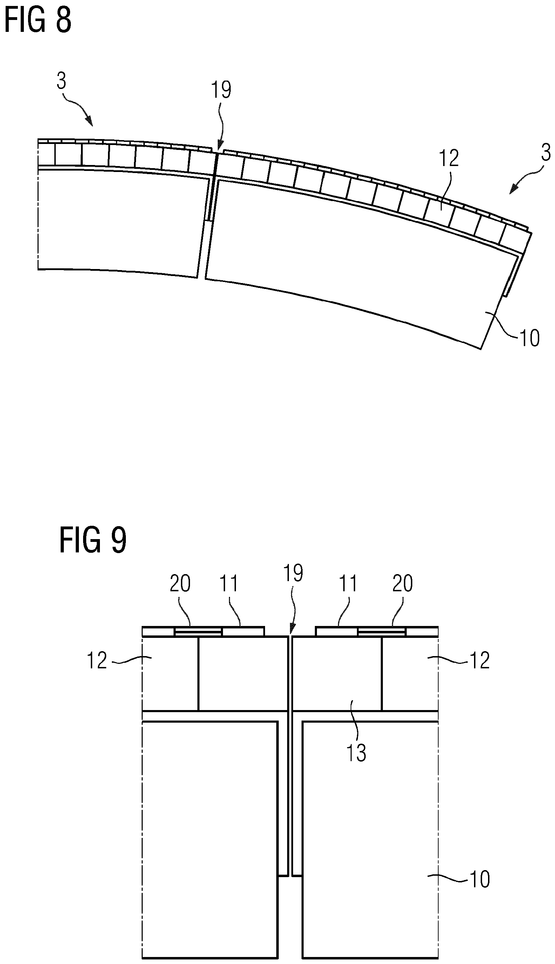

FIG 8 zeigt eine Seitenansicht des Segmentgrenzspaltes 19 zweier benachbarter Statorsegmente 3. Es wird dabei versucht, die Nutbreite der beiden offenen Nuten 8 in Summe wie eine Nutbreite der geschlossenen Nut 7 zu erhalten, um damit ein homogenes Luftspaltfeld auch im Bereich der Segmentgrenzspalte 19 zu erhalten. Dies bedingt ein Aneinanderliegen der beiden Spulenseiten 24, mit der "Gefahr" des sich gegenseitig Beschädigen.

FIG 9 zeigt eine Detailansicht des Segmentgrenzspaltes 19.

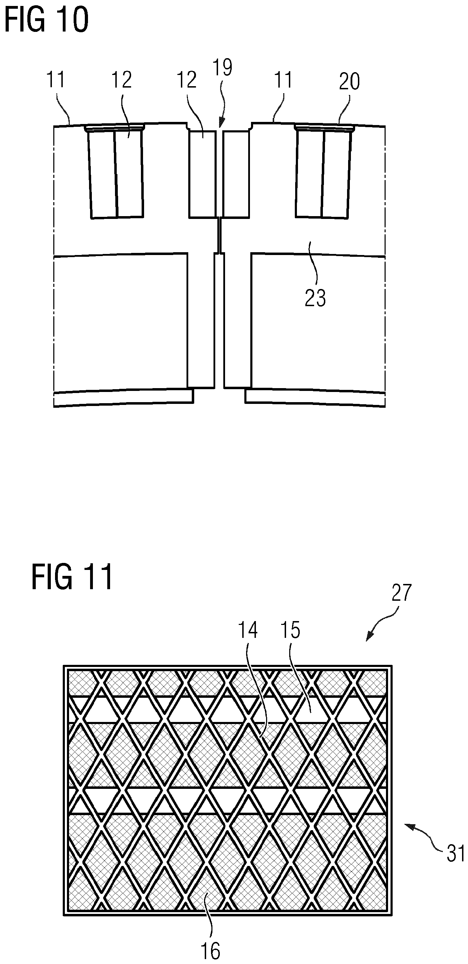

FIG 10 zeigt einen Querschnitt zweier benachbarter Statorsegmente 3, mit dem Segmentgrenzspalt 19.

FIG 11 zeigt ein prinzipielles Fixierelement 27, welches eine oder mehrere Silikonschlangen 15 beidseitig auf einem Hartgewebe 16 zeigt, wobei die Silikonschlagen 15 durch ein grobmaschiges Gewebe 16 oder Bandage abgedeckt sind. Die Maschenweite ist des Gewebes 16 ist dabei so gewählt, dass bei einem Druck in Richtung 18, das Silikon durch die Maschen 25 gedrückt wird und mit den Spulenseiten 24 verklebt.

Das Fixierelement 27 bewirkt auch eine Isolation zwischen den Spulenseiten 24 unterschiedlicher Spulen von ggf. unterschiedlicher elektrischer Phase an den Segmentgrenzen 28 bzw. im Segmentgrenzspalt 19.

Die Silikonschlangen 15 sind im wesentlichen achsparallel können aber auch mäandernd angeordnet sein. Ebenso sind die Silikonschlangen 15 auf beiden Seiten des Hartgewebes 16 auf gleicher oder unterschiedlicher radialer Höhe und/oder unterschiedlich dick bzgl. ihres Durchmessers 33 oder Querschnitts ausgeführt.

Ebenso kann auch silikonähnliches Material verwendet werden.

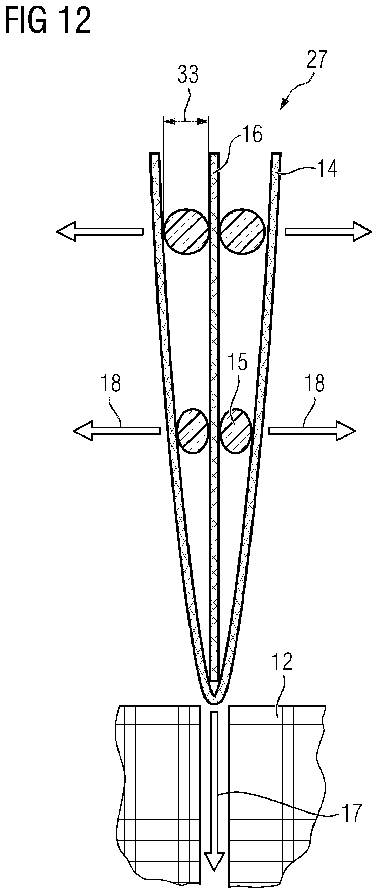

FIG 12 zeigt in einem Querschnitt das Fixierelement 27 und den prinzipiellen Montagevorgang. Dabei wird das Fixierelement 27, mittels dem Hartgewebe 16, an dem das Silikon positioniert und durch das Gewebe 14 gehalten ist, radial in Bewegungsrichtung 17 in den Segmentgrenzspalt 19 eingesetzt.

Das Silikon wird durch das schwertartige Eindrücken des Hartgewebes 16 in den Segmentgrenzspalt 19 und durch den dadurch entstehenden Druck, durch das grobmaschige Gewebe 14 in Richtung 18, also Richtung Spulenseiten 24 gepresst und verklebt dort den beiden Spulenseiten 24.

Das Fixierelement 27 erlaubt dem Montagepersonal eine trockene Handhabung während der "Statorsegment zu Statorsegment Montage".

Des Weiteren wird durch das Fixierelement 27 eine vergleichsweise gute Anbindung an die Spulenseiten 24 gewährleistet. Dies garantiert eine dauerhafte Fixierung der Spulenseiten 24 im Segmentgrenzspalt 19, auch bei höheren Temperatureinwirkungen ohne das Beschädigungen an den Spulenseiten 24 auftreten.

Das Fixierelemente 27 kann in den Segmentgrenzspalt 19 von benachbarten vormontierten Statorsegmenten 3 eingesetzt werden, als auch in die bereits endmontierten benachbarten Statorsegmente 3. Dies wird im Einzelfall von der Geometrie, insbesondere Weite der vorliegenden Segmentgrenzspalte 19 abhängen.

Des Weiteren können durch das Fixierelement 27 Toleranzen des Segmentgrenzspaltes 19 ausgeglichen werden, was zu einer homogenen Oberfläche beiträgt.

Ergänzend dazu kann die außenliegende Spulenseite 24 eines Statorsegments 3, also der Spulenschenkel in der offenen Nut 8 mittels einer Bandage, insbesondere des amagnetischen Kabelbinders fixiert werden. Damit erleichtert sich auch im Fertigungsprozess die Imprägnierung des Statorsegments 3, da ein "sich bewegbarer außenliegenden Spulenschenkels" vermieden wird. Die Bandage zieht somit die Spulenseite 24 an die Nutseitenwand der offenen Nut 8. Die Bandage verbleibt dann am Statorsegment 3 bei der oben beschriebenen Fixierung der benachbarten Spulenseiten 24 in den Segmentgrenzspalten 19.

Durch diese nicht-magnetische Befestigungsmittel werden Aufheizungen durch Wirbelströme im Betrieb der dynamoelektrischen Maschine, also z.B. des Windkraftgenerators vermieden. Des Weiteren wird durch die Fixierung der außenliegenden Spulenschenkel, insbesondere während des Fertigungsprozesses, hier vor allem des Imprägnierungsprozesses, aber auch während des Montageprozesses gewährleistet, dass sich der Spulenschenkel nicht von dem, eine offene Nut bildenden Zahn entfernt und somit die Montage oder weitere Fertigungsschritte beeinträchtigt.

Außerdem wird dadurch auch eine Beschädigung der Isolation an der umfänglich äußeren Spulenseite vermieden, die sich bei der Montage der Statorsegmente zu einem Stator ergeben kann.

In einer Ausführung werden die amagnetischen Befestigungsmittel, z.B. die Bandage beispielsweise aus Kunststoff oder anderen nicht magnetischen Werkstoffen, wie Aluminium. insbesondere durch nicht-magnetische Kabelbinder, Schnüre oder Bänder realisiert, was eine im Fertigungsprozess schnelle und unproblematische Fixierung durch kostengünstige Standardteile gewährleistet.

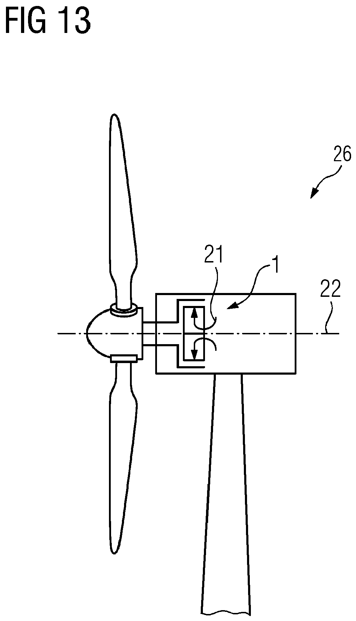

Eine derartige Anordnung von Statorsegmenten 3 wird bei Statoren 2 bevorzugt, die für große Leistungen und/oder Direktantriebe, insbesondere bei Windkraftanlagen 26 gemäß FIG 13 oder Rohrmühlen vorgesehen sind. Ein Rotor ist mit Permanentmagneten und/oder mit eigenem Wicklungssystem versehen. Er dreht dabei sich um eine Achse 22, wobei die Nuten 7 des Statorsegments 3 und damit des Stators 2 im Wesentlichen achsparallel ausgerichtet sind.

FIG 13 zeigt dabei eine Windkraftanlage 26 mit einem direkt angetriebenen Generator - also ohne Getriebe - der als Außenläufer ausgebildet ist.

Dabei kann ein Lüfter einen Kühlstrom 21 erzeugen, der zumindest den Generator und/oder Umrichterkomponenten, insbesondere den Stator 2 über die durch die Abstandshalter 6 generierten radialen Kühlkanäle bzw. Spalte 5 im Statorsegment 3 kühlt.

## Patentansprüche

1. Verfahren zur Fixierung von benachbarten Spulenseiten (24) unterschiedlicher Spulen (12) in einander zuweisenden offenen Nuten (7) in einem Segmentgrenzspalt (19) zwischen Statorsegmenten (3) eines umfänglich aus Statorsegmenten (3) aufgebauten Stators (2) einer dynamoelektrischen Maschine (1), insbesondere Windkraftgenerator durch folgende Schritte:
- zumindest Vorpositionieren der Statorsegmente (3) auf einem Statorträger (30),
- radiales Einsetzen zumindest eines Fixierelements (27) in den jeweiligen Segmentgrenzspalt (19),
- endgültiges Positionieren der Statorsegmente (3) am Statorträger (30).

2. Verfahren zur Fixierung von benachbarten Spulenseiten (24) unterschiedlicher Spulen (12) in einander zuweisenden offenen Nuten (7) in einem Segmentgrenzspalt (3) nach Anspruch 1, **dadurch gekennzeichnet , dass** die Fixierelemente (27) bis auf radiale Höhe des Nutgrundes der offenen Nut (7) eingesetzt werden.

3. Stator (2) einer dynamoelektrischen Maschine (1), insbesondere Windkraftgenerator, mit umfänglich angeordneten Statorsegmenten (3),
- wobei jedes Statorsegment (3) axial hintereinander angeordnete genutete Blechen aufweist, die ein Blechpaket (32) bilden, so dass im Wesentlichen axial verlaufende Nuten (7) gebildet sind,
- wobei die Statorsegmente (3) abgeschlossene Wickeleinheiten aus Spulen (12), insbesondere Zahnspulen oder Formspulen aufweisen,
- wobei in einer Nut (7) eine Spulenseite (24) oder zwei Spulenseiten (24) unterschiedlicher Spulen (12) angeordnet sind,
- wobei an einer umfänglichen Segmentgrenze (28) in offenen Nuten (8) der Statorsegmente (3) eine Spulenseite (24) einer Spule (12) angeordnet sind,
- wobei in einem Segmentgrenzspalt (19) zwischen den umfänglich betrachtet benachbarten Statorsegmenten (3) Fixierelemente (27) vorhanden sind, die die Spulenseiten (24) unterschiedlicher Spulen (12) benachbarter Statorsegmente (3) in den offenen Nuten (8) mittels der Fixierelemente (27) beabstandet fixieren und/oder positionieren.

4. Stator (2) einer dynamoelektrischen Maschine (1), insbesondere Windkraftgenerator, nach Anspruch 3, **dadurch gekennzeichnet , dass** die Fixierelemente (27) mit den umfänglich benachbarten Statorsegmenten (3), insbesondere den Spulenseiten (24) der Spulen (12) verklebt sind.

5. Stator (2) einer dynamoelektrischen Maschine (1), insbesondere Windkraftgenerator, nach Anspruch 3 oder 4, **dadurch gekennzeichnet , dass** die Fixierelemente (27) kissenartig ausgebildet sind.

6. Stator (2) einer dynamoelektrischen Maschine (1), insbesondere Windkraftgenerator, nach einem der Ansprüche 3 bis 5, **dadurch gekennzeichnet , dass** die Fixierelemente (27) Silikonschlangen (15) aufweisen, die achsparallel und/oder mäandernd in der Ebene des Segmentgrenzspaltes (19) verlaufen.

7. Stator (2) einer dynamoelektrischen Maschine (1), insbesondere Windkraftgenerator, nach 3 bis 6, **dadurch gekennzeichnet , dass** Spulenseiten (24) zusätzlich durch Bandagen jeweils an dem umfänglich betrachtet letzten Zahn (11) fixiert sind.

8. Stator (2) einer dynamoelektrischen Maschine (1), insbesondere Windkraftgenerator, nach einem der Ansprüche 3 bis 7, **dadurch gekennzeichnet, dass** das Blechpaket (32) axial durchgängig oder mit axial hintereinander angeordneten Teilblechpaketen (4) ausgeführt ist.

9. Stator (2) einer dynamoelektrischen Maschine (1), insbesondere Windkraftgenerator, nach Anspruch 8, **dadurch gekennzeichnet , dass** die Teilblechpakete (4) in axial vorgebbaren Abständen durch Abstandshalter (6) voneinander beabstandet sind, so dass sich Spalte (5) bilden.

10. Dynamoelektrischen Maschine (1), insbesondere direkt angetriebener Windkraftgenerator mit einem Stator (2) nach einem der vorhergehenden Anspruche 3 bis 9, **dadurch gekennzeichnet , dass** der Stator (2) als ein innenliegender Stator (2) ausgebildet ist und einen Außenläufer aufweist.

11. Dynamoelektrischen Maschine (1), insbesondere direkt angetriebener Windkraftgenerator mit einem Stator (2) nach einem der vorhergehenden Anspruche 3 bis 9, **dadurch gekennzeichnet , dass** der Stator (2) als außenliegender Stator (2) ausgebildet ist und einen Innenläufer aufweist.

12. Dynamoelektrischen Maschine (1), insbesondere direkt angetriebener Windkraftgenerator mit einem Stator (2) nach einem der vorhergehenden Anspruche 3 bis 11, **dadurch gekennzeichnet , dass** ein Kühlsystem, insbesondere Lüfter vorgesehen ist, der u.a. über die vorhandenen Spalte (5) zwischen den Teilblechpaketen (4) Kühlluft fördert.

13. Windkraftanlage (26) mit einer dynamoelektrischen Maschine (1) nach Anspruch 10, 11 oder 12.
